# EUROPÄISCHE PATENTSCHRIFT

(11) **EP 1 450 201 B1**
(45) Veröffentlichungstag und Bekanntmachung des Hinweises auf die Patenterteilung: **16.09.2009**
(21) Anmeldenummer: 04003924.0
(22) Anmeldetag: 20.02.2004
(51) Int. Cl.: G02C 13/00

(54) **Verfahren zur Ermittlung des Pupillenabstandes**
Method for determining interpupillery distance
Méthode pour déterminer l'écart pupillaire

(30) Priorität: 22.02.2003 DE 10307636
(43) Veröffentlichungstag der Anmeldung: 25.08.2004
(73) Patentinhaber: Ollendorf, Hans-Joachim, 39517 Brunkau (DE)
(72) Erfinder: Ollendorf, Hans-Joachim, 39517 Brunkau (DE); Haas, Peter Johann, 39179 Barleben (DE)
(74) Vertreter: Leinung, Günter

(56) Entgegenhaltungen:
- DE-A- 10 007 705
- DE-A- 10 020 005
- DE-A- 10 033 983
- DE-A- 10 125 050
- FR-A- 2 663 528
- FR-A- 2 690 832
- FR-A- 2 829 842

## Beschreibung

Die Erfindung betrifft ein Verfahren zur Ermittlung des Pupillenabstandes als Bestandteil eines Video-Zentriersystems zur exakten Bestimmung brillenglaseinschleifrelevanter Parameter.

Es ist allgemein bekannt, dass Video-Systeme zur Ermittlung der brillenglaseinschleif relevanten Parameter verwendet werden, die darauf basieren, dass jeweils ein Video-Foto vom Probanden mit der angepasst aufgesetzten Fassung einer späteren Brille angefertigt wird.
So beschreibt die DE 43 23 384 C2 eine Vorrichtung zum Messen der zur Anpassung optischer Gläser an ein Brillengestell notwendigen Parameter, insbesondere des Pupillenabstandes und der Höhe der Pupillen einer Person in Bezug auf das Brillengestell, welche eine Kamera besitzt, die zur Aufnahme des Kopfes der das Brillengestell tragenden Person bestimmt und gegenüber dem Kopf ausrichtbar ist. Die Vorrichtung ist ferner mit einer elektronischen Bildverarbeitung zum Bestimmen der Parameter aus der Aufnahme des Kopfes bei einem bestimmten Messabstand zwischen Kopf und Kamera ausgebildet. In der Kamera ist ein Koinzidenzentfernungsmesser vorgesehen, der ein dem Objektiv der Kamera nachgeordnetes optisches System zur Aufteilung der Abbildung in vier nebeneinander liegende Bilder oder Teilbilder aufweist. Dies derart, dass der richtige Messabstand erreicht wird, wenn sich die Bilder oder Teilbilder zu einem einzigen Bild zusammenfügen.
Diese Vorrichtung besteht im Wesentlichen aus einer vom Bediener auf den Kunden/Probanden auszurichtenden Kamera mit einem nachgeordneten optischen System zur Ermittlung des vorgegebenen Messabstandes auf Basis einer Koinzidenzentfernungsmessung. Nachteilig bei dieser Lösung ist zum einen der hohe technische Aufwand zur Realisierung der Vorrichtung und zum anderen sind durch die Handhabung der Vorrichtung Messfehler nicht ausschließbar.

Eine Vorrichtung sowie ein Verfahren zur Bestimmung der Zentrierdaten für die Einarbeitung von Brillengläsern in Brillenfassungen beschreibt die DE 100 20 050 A1, welche unter Verwendung einer Kamera eines Zentrierreiters mit einer Lichtquelle, die den Probanden zwingt, in eine vorher erklärte Richtung zu schauen, wobei die Messdaten an einer zuvor eingearbeiteten Zentrierfolie abgelesen und als Lichtquelle vorzugsweise Laser-Pointer verwendet werden.

Eine weitere Lösung, die eine digitale Messung des Pupillenabstandes der Augen eines Menschen ermöglichen soll, beschreibt die DE 100 05 801 A1. Das vorgeschlagene Untersuchungsgestell zum Messen des Pupillenabstandes der Augen eines Patienten besteht aus einem Linsenhalter, einer Einrichtung zum Bewegen des Linsenhalters längs des Gestells auf die Nase oder die Schläfe des Patienten zu. Ferner ist das Untersuchungsgestell mit einer elektrischen Stromquelle und Metallstreifen ausgebildet, durch die ein Strom fließt. Durch Verdrehung der Linsenhalter wird die Größe des Stromes gemessen, der durch die metallischen Leiter läuft und durch die Messung des Stromes erfolgt ein Rückschluss auf den Pupillenabstand der Augen des jeweiligen Probanden.

Ferner sei auf die bekannten Druckschriften, die DE 100 20 005 A1 die FR-A-2 663 528 und die DE 100 07 705 A1 verwiesen, die sich auf eine Vorrichtung und ein Verfahren zur Bestimmung von Zentrierdaten für den Einbau von Brillengläsern, eine Einrichtung zur Ermittlung des Pupillenabstandes und auf ein Verfahren zur Anpassung einer Brille an die Augenstellung einer Person, eines Probanden beziehen. So wird beschrieben, dass mit einem Zentrierreiter und einer darauf montierten Lichtquelle sichergestellt wird, dass damit der Sitz der Brille zusammen mit dem Lichtstrahl festgestellt werden kann, wobei zwei Lichtquellen neben der Kamera angebracht werden, dann zwei Reflexpunkte auf der menschlichen Augenhornhaut erzeugt werden, die als Fixpunkt Verwendung finden. Mit einer in die Brillenfassung eingesetzten handelsüblichen Strichfolie werden dann die Zentrierdaten abgelesen.

Das Verfahren zur Anpassung einer Brille an die Augenstellung einer Person läuft so ab, dass mittels einer auf das Gesicht der Person gerichteten mit einem Computer verbundenen Digitalkamera ein Bild des Gesichtes der Person aufgenommen wird, wobei am Gesicht der Person eine zweidimensionale Referenzmarkierung vorgegebener Abmessung angebracht ist und anhand markanter Punkte des Bildes im Verhältnis zur Referenzmarkierung die Maße zur Anpassung der Brille, insbesondere der Abstand der Pupillen, bestimmt werden.

Nachteilig muss auch bei diesen Lösungen angemerkt werden, dass für die notwendigen Korrekturberechnungen, insbesondere der Konvergenz, des "nach innen Drehens" der Augen bei kurzer Sehentfernung, von einer in den jeweiligen Systemdaten eingetragenen Aufnahmeentfernung zwischen dem Probanden und der Aufnahmekamera ausgegangen wird, wobei die Korrekturberechnungen wiederum nur in dem Maße korrekt erfolgen, indem die eingetragenen Aufnahmeentfernungen während der Aufnahmen auch tatsächlich eingehalten werden.

Der Erfindung liegt daher die Aufgabe zugrunde, ein Verfahren zur Ermittlung des Pupillenabstandes zu entwickeln, welche als Bestandteil eines Video-Zentriersystems zur exakten Bestimmung brillenglaseinschleifrelevanter Parameter dient und mit der die Nachteile der bekannten Lösungen weitestgehend vermieden werden.

Erfindungsgemäß wird die Aufgabe mit den Merkmalen des Anspruches 1 gelöst. Besondere Ausgestaltungen und vorteilhafte Lösungen ergeben sich aus den Unteransprüchen.

Die Erfindung geht von der allgemeinen Erkenntnis aus, dass als Voraussetzung anzusehender Video-Systeme zur exakten Ermittlung aller brillenglaseinschleifrelevanten Parameter diese auf der grundsätzlichen Funktionsweise basieren, dass ein Video-Foto vom Probanden mit der angepasst aufgesetzten Fassung seiner späteren Brille angefertigt wird. Dieses Foto wird anschließend auf einem Monitor mittels Software so vermessen, dass die Lage der Pupillenmitten der Augen relativ zu den inneren Brillenfassungskanten als Einschleifpositionen der zu fertigenden Brillengläser in den Fassungen der Brille dienen. Dabei wird für die notwendigen Korrekturberechnungen, insbesondere der Konvergenz, von einer in den jeweiligen Systemdaten eingetragenen Aufnahmeentfernung zwischen dem Probanden und der Aufnahmekamera ausgegangen.
Das Verfahren zur Ermittlung des Pupillenabstandes ist erfindungsgemäß Bestandteil eines Video-Zentriersystems, mittels dem die brillenglaseinschleifrelevanten Parameter bestimmt werden, wobei insbesondere erfinderisch ist, dass die Aufnahmeentfemung zwischen einer Kalibriereinrichtung und einer Kamera ermittelt wird, auf deren Grundlage eine Korrekturberechnung erfolgt, um die tatsächlichen Werte des Pupillenabstandes des jeweiligen Probanden zu erhalten.

Dabei wird die auszumessende Brillenfassung des Probanden mit einer Kalibriereinrichtung in Brillenglasebene versehen, die mit zwei Markierungen ausgerüstet ist, die sich in festem, definiertem und bekanntem Abstand zueinander befinden. Die Kalibriereinrichtung ist Bestandteil des Video-Zentriersystems, zu dem gleichfalls eine Kamera mit entsprechender Zoomeinrichtung sowie ein Computer mit einer Bildwiedergabe, einem Monitor, gehören.
Die Abbildungsgröße des Probanden, dass heißt, die Objektgröße in Form des Abstandes der beiden Augen des Probanden, wird auf dem Monitor des Systems durch stufenlose Verstellung der Brennweite des Objektives, der Zoomeinrichtung der Kamera, vom Bedienenden des Video-Zentriersystems auf einen für die Zentrierfunktion zweckmäßigen Wert eingestellt.
Zum Zeitpunkt der Aufnahme wird neben den Bildinformationen (Pixel) auch der aktuell zutreffende Wert der Brennweite (Zoomfaktor) des Objektives der Kamera dem Computer übermittelt.
Somit besteht erfmdungsgemäß ein fester abbildungsmaßstäblicher Zusammenhang zwischen der Abbildungsgröße des Objektes auf der Abbildungsebene der Kamera sowie der Abbildungsgröße auf dem Monitor des Computers. Somit besteht auch ein von den Werten der Brennweite des Objektives der Kamera und der Entfernung des Objektes von der Kamera abhängiges Verhältnis zwischen der Objektgröße und seiner Abbildungsgröße auf dem Monitor.

Erfindungsgemäß wird die Abbildungsgröße des Objektes auf dem Monitor des Computers mittels einer Auswertungssoftware durch den Bedienenden des Video-Zentriersystems oder automatisch ermittelt. Die Brennweite des Objektives der Kamera zum Aufnahmezeitpunkt des Objektes sowie die originale Objektgröße sind bekannt. Somit wird die Entfernung des Objektes zur Kamera, also die Aufnahmeentfernung, über zuvor ermittelte kameratypspezifische Kennziffer- oder Kennfeldfunktionen ermittelt. Die Aufnahmeentfernung bildet die Grundlage für die Korrekturberechnung der Konvergenz, sie ist somit die Basis zur Ermittlung der tatsächlich notwendigen, der richtigen Positionen des Pupillenabstandes der Augen des Probanden.

Anhand der beigefügten Zeichnung wird die Erfindung nachstehend näher beschrieben, wobei die Zeichnung in stark schematisierter Darstellung die Einrichtung zur Ermittlung des Pupillenabstandes zeigt.

So zeigt
- Figur 1:: die Einrichtung in ihrer Gesamtheit und
- Figur 2:: die Einrichtung in ihrer Gesamtheit mit den ermittelten tatsächlichen Werten des Pupillenabstandes nach dem Messvorgang.

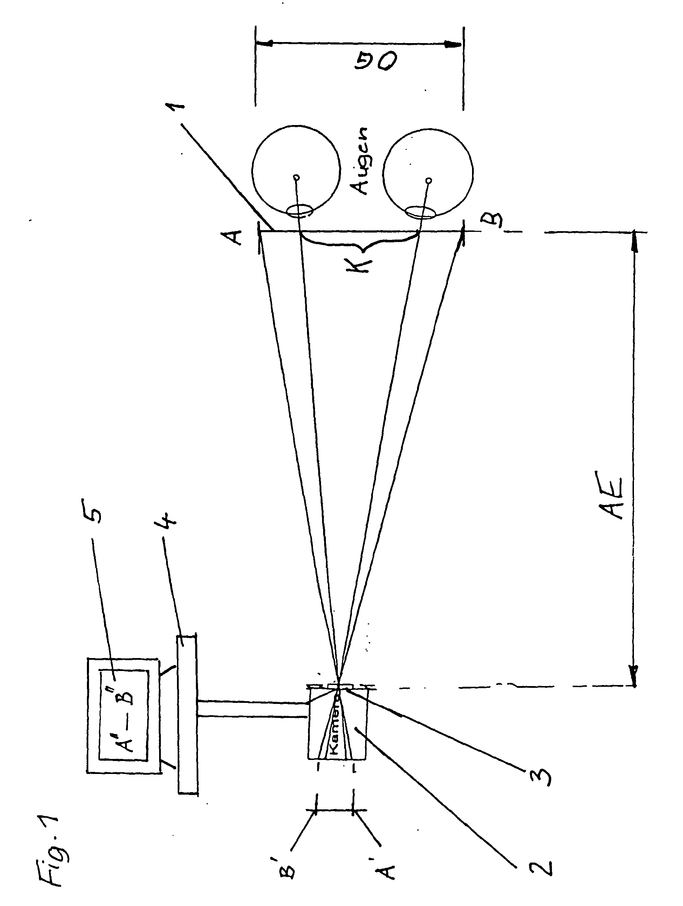

Das komplette Video-Zentriersystem zur exakten Bestimmung der brillenglaseinschleifrelevanten Parameter, zu dem auch die Einrichtung zur Ermittlung des Pupillenabstandes gehört, ergibt sich aus der Darstellung der Figur 1.

So besteht das Video-Zentriersystem aus einer Kalibriereinrichtung 1, einer Kamera 2 mit Zoomeinrichtung 3 sowie einem Computer 4 mit zugeordnetem Monitor 5.

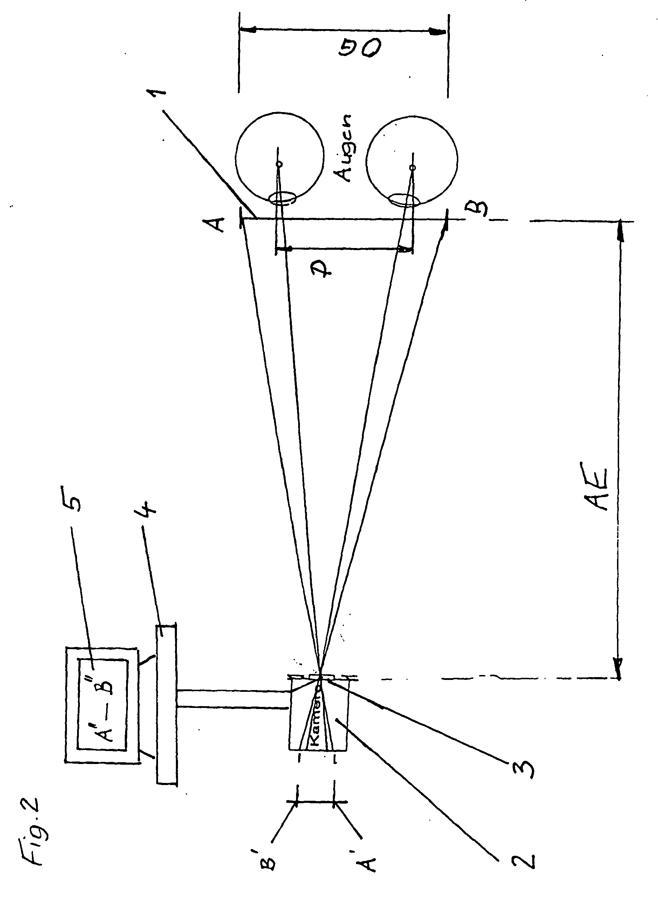

Die in den Figuren 1 und 2 verwendeten Bezeichnungen bedeuten:
- A; B:: Markierungen
- K:: Konvergenz, dass heißt, die konvergierte Position der Augen
- AE:: Aufnahmeentfernung
- OG:: Objektgröße
- P:: richtige Position der Augen/Pupillenabstand.

Die auszumessende Brillenfassung des Probanden wird mit einer Kalibriereinrichtung 1 in dessen Brillenglasebene versehen.
Die Kalibriereinrichtung 1 ist mit zwei Markierungen A; B ausgerüstet, welche sich in festem, definiertem und bekanntem Abstand zueinander befinden und die Objektgröße OG bestimmen.
Mittels der Kamera 2 und ihrer Zoomeinrichtung 3 erfolgt die Aufnahme eines Spiegelbildes der Objektgröße OG, die in der Figur 1 mit den Markierungen A' und B' gekennzeichnet sind. Die Kamera 2 ist mit dem Computer 4 und dessen Monitor 5 verbunden, so dass die Markierungen A' und B' auf den Monitor 4 übertragen und auf diesem wiedergegeben werden. Auf dem Monitor 5 werden diese Wertgrößen mit den Markierungen A" und B" dargestellt.
Neben der Übertragung der Markierungspunkte A' und B' von der Kamera 2 auf den Monitor 5 wird gleichfalls die Zoomposition der Kamera 2 auf den Computer 4 und den Monitor 5 geführt.
Die Abbildung der Objektgröße OG des Probanden wird auf dem Monitor 5 durch stufenlose Verstellung der Brennweite der Zoomeinrichtung 3 vom Bedienenden des Video-Zentriersystems auf einen für die Zentrierfunktion wertmäßigen Wert eingestellt.
Zum Zeitpunkt der Aufnahme werden neben den Bildinformationen auch der aktuell zutreffende Wert der Brennweite der Zoomeinrichtung 3 dem Computer 4 übermittelt.
Es besteht ein fester abbildungsmaßstäblicher Zusammenhang zwischen der Abbildungsgröße der Objektgröße OG, auf der Abbildungsebene der Kamera 2, hier mit den Markierungen A' und B' angegeben sowie der Abbildungsgröße der Objektgröße OG auf dem Monitor 5, hier dargestellt mit den Markierungen A" und B".

Damit besteht gleichfalls ein von den Werten der Zoomeinrichtung 3 der Kamera 2 zur Entfernung des Objektes von der Kamera 2 abhängiges Verhältnis zwischen der Objektgröße OG, dargestellt mit den Markierungen AB und der Abbildungsgröße des Objektes auf dem Monitor 5, gekennzeichnet mit den Markierungen A" und B".
Wie in der Figur 1 gezeigt, ist die Objektgröße OG auf der Kalibriereinrichtung 1 mit den Markierungen A; B wiedergegeben.
Die konvergierte Position der Augen/Pupillen, zum Zeitpunkt der Bildaufnahme ist mit der Kennzeichnung K dokumentiert.
Der Abstand zwischen der Kalibriereinrichtung 1 und der Kamera 2 stellt die Aufnahmeentfernung AE dar.

Die Abbildungsgröße des Objektes auf dem Monitor 5 wird mittels einer entsprechenden Auswertungssoftware durch den Bedienenden der Anlage oder auch automatisch ermittelt. Hier optisch dargestellt in den Figuren 1 und 2 mit den Markierungen A" und B". Die Zoomposition der Kamera 2 zum Aufnahmezeitpunkt ist bekannt, gleichfalls die originale Objektgröße OG, bildlich dargestellt durch die Markierungen A; B auf der Kalibriereinrichtung 1. Unter Einbeziehung dieser vorhandenen Werte erfolgt die exakte Bestimmung der Aufnahmeentfernung AE, auf deren Grundlage die richtigen Werte für die tatsächlichen Positionen der Pupillen der Augen des Probanden bestimmt werden, in Figur 2 mit P gekennzeichnet. Damit sind gleichfalls die brillenglaseinschleifrelevanten Parameter für den Brillenglaseinsatz festgelegt.

## Patentansprüche

1. Verfahren für die Ermittlung des Pupillenabstandes zur exakten Bestimmung brillenglaseinschleifender Parameter für die Anpassung optischer Gläser in ein Brillengestell mittels eines Video-Zentriersystems, bei dem die Objektgröße (OG) durch Markierungen (A; B) auf einer Kalibriereinrichtung, welche in der Brillenglasebene der zu bestimmenden Brillenfassung vorgesehen ist, angezeigt wird,
**dadurch gekennzeichnet dass**,
die Markierungen (A; B) über eine Kamera (2) erfasst, einem Computer (4) zugeleitet und daraus der tatsächliche Wert der Aufnahmeentfernung (AE) ermittelt wird, auf dessen Grundlage die Werte der Position (P) des Pupillenabstandes bestimmt werden, wobei ein von den Werten der Brennweite einer Zoomeinrichtung (3) der Kamera (2) und der Entfernung des Objektes von der Kamera (2) abhängiges Verhältnis zwischen der Objektgröße (OG) und seiner Abbildungsgröße in Form der Markierungen (A"; B") auf einem Monitor (5) gegeben ist und auf der Grundlage des Verhältnisses zwischen Objektgröße (OG) und der Abbildungsgröße in Form der Markierungen (A"; B") die Korrekturberechnung der Konvergenz erfolgt.

2. Verfahren nach Anspruch 1, **dadurch gekennzeichnet, dass**
ein fester abbildungsmäßiger Zusammenhang zwischen der Abbildungsgröße des Objektes auf der Abbildungsebene der Kamera (2) und der Abbildungsgröße auf dem Monitor (5) des Computers (4) besteht, gleichfalls ein von den Werten der Brennweite des Objektes der Kamera (2) abhängiges Verhältnis zwischen der Objektgröße OG und seiner Abbildungsgröße, **gekennzeichnet durch** die Markierungen A"; B", gegeben ist.

3. Verfahren nach den Ansprüchen 1 und 2, **dadurch gekennzeichnet, dass**
auf der Grundlage der Aufnahmeentfernung AE die Korrekturberechnung der Konvergenz K und so der richtigen Position P der Pupillen der Augen des Probanden erfolgt.

4. Verfahren nach den Ansprüchen 1 bis 3, **dadurch gekennzeichnet, dass**
die Bestimmung der richtigen Position des Pupillenabstandes P eines Probanden über ein Video-Zentiersystem erfolgt, bei der eine Kamera (2) mit Zoomeinrichtung (3) sowie ein Computer (4) mit Monitor (5) in das Video-Zentriersystem eingebunden sind.

## Claims

1. Procedure for ascertaining the pupil distance for exact determination of spectacle-lens grinding parameters for fitting optical lenses in a spectacle frame by means of a video centring system in which the object size (OG) is displayed by marking (A; B) on a calibrating means, which is provided in the spectacle lens level of the spectacle frame to be defined, **characterized in that**
the marking (A; B) is acquired by a camera (2), fed to a computer (4) and that the actual value of the picture distance (AE) is determined from this and on this basis the values of the position (P) of the pupil distance is found and whereby one of the values of the focal distance is given by a zoom arrangement (3) of the camera (2) and the distance of the object from the camera (2) is a dependent relationship between the object size (OG) and its depiction size in the form of the marking (A", B") on a monitor (5) and the correction calculation of the convergence is carried out on the basis of the relationship between object size (OG) and the depiction size in the form of the marking (A"; B").

2. Procedure according to claim 1 **characterized in that**
there is a fixed depiction linkage between the depiction size of the object on the depiction level of the camera (2) and the depiction size on the monitor (5) of the computer (4) and also a relationship of the values of the focal distance of the object of the camera (2) between the object size (OG) and its depiction size **characterized by** the marking A", B".

3. Procedure according to claims 1 and 2 **characterized in that**
the correct position (P) of the convergence K and thus the correct position of the pupils of the eyes of the subject is carried out on the basis of the picture distance AE.

4. Procedure according to claims 1 to 3 **characterized in that**
determination of the correct position of the pupil distance P of a subject is carried out by a video centring system in which a camera (2) is combined with a zoom means (3) as well as a computer (4) with monitor (5).

## Revendications

1. Procédé permettant de définir l'écart pupillaire en vue d'une détermination précise des paramètres relatifs à la rectification des verres de lunettes pour l'adaptation de verres optiques dans une monture au moyen d'un système de centrage vidéo, où est affichée la taille de l'objet (OG) par des marquages (A; B) sur un dispositif de calibrage prévu dans le niveau des verres de la monture de lunettes à déterminer, **caractérisé par le fait**
**que** les marquages (A; B) sont enregistrés au moyen d'une caméra (2), transmis à un ordinateur (4), que la valeur réelle de la distance focale (AE) est ainsi obtenue, sur la base de laquelle sont déterminées les valeurs de la position (P) de l'écart pupillaire, un rapport entre la taille d'objet (OG) et la taille de son image, qui dépend des valeurs de la distance focale d'un système zoom (3) de la caméra (2) et de la distance de l'objet par rapport à la caméra (2) intervenant sous forme de marquages (A"; B") sur un moniteur (5) et l'évaluation de la correction de la convergence s'effectuant sur la base du rapport entre la taille d'objet (OG) et la taille d'image sous forme de marquages (A"; B").

2. Procédé conformément à la revendication n°1, **caractérisé par le fait**
**qu'**il existe une corrélation fixe, propre à l'image, entre la taille d'image de l'objet sur le plan de projection de la caméra (2) et la taille d'image apparaissant sur le moniteur (5) de l'ordinateur (4), un rapport entre la taille d'objet OG et la taille de son image, marqué par les marquages A"; B", qui dépend des valeurs de la distance focale de l'objet de la caméra (2) étant également défini.

3. Procédé conformément aux revendications n°1 et n°2, **caractérisé par le fait**
**que** l'évaluation de la correction de la convergence K et donc de la bonne position P des pupilles des yeux d'un sujet d'expérience s'effectue sur la base de la distance focale AE.

4. Procédé conformément aux revendications n°1 à n°3, **caractérisé par le fait**
**que** la détermination de la position exacte de l'écart pupillaire P d'un sujet d'expérience est effectuée au moyen d'un système de centrage vidéo, où une caméra (2) avec système zoom (3) ainsi qu'un ordinateur (4) avec moniteur (5) sont intégrés dans le système de centrage vidéo.
